# EUROPEAN PATENT SPECIFICATION

(11) **EP 4 420 832 B1**
(45) Date of publication and mention of the grant of the patent: **07.05.2025**
(21) Application number: 24153344.7
(22) Date of filing: 23.01.2024
(51) Int. Cl.: B25B 23/00, B25B 23/08

(54) **TAPPING SCREW FASTENING JIG AND FASTENING METHOD USING TAPPING SCREW FASTENING JIG**
GEWINDESCHNEIDSCHRAUBENBEFESTIGUNGSVORRICHTUNG UND BEFESTIGUNGSVERFAHREN MIT GEWINDESCHNEIDSCHRAUBENBEFESTIGUNGSVORRICHTUNG
GABARIT DE FIXATION DE VIS TARAUDEUSE ET PROCÉDÉ DE FIXATION UTILISANT LE GABARIT DE FIXATION DE VIS TARAUDEUSE

(30) Priority: 24.02.2023 JP 2023026899
(43) Date of publication of application: 28.08.2024
(73) Proprietor: TOYOTA JIDOSHA KABUSHIKI KAISHA, Toyota-shi, Aichi-ken, 471-8571 (JP)
(72) Inventor: MIURA, Kazuya, Toyota-shi, 471-8571 (JP); NAKAI, Takashi, Toyota-shi, 471-8571 (JP); NITANI, Riyo, Toyota-shi, 471-8571 (JP); KANEHARA, Takumi, Toyota-shi, 471-8571 (JP); INAGUMA, Wataru, Toyota-shi, 471-8571 (JP)
(74) Representative: J A Kemp LLP

(56) References cited:
- DE-U1- 202011 106 420
- US-A- 2 235 235
- US-A1- 2020 011 073

## Description

### BACKGROUND OF THE INVENTION

### 1. Field of the Invention

The present disclosure relates to a tapping screw fastening jig and a fastening method using the tapping screw fastening jig.

### 2. Description of Related Art

A tapping screw is known as a fastener for fastening a fastening tool to a non-threaded pilot hole. When a tapping screw is used for fastening, a guide jig as disclosed in, for example, Japanese Unexamined Patent Application Publication No. 9-38828 (JP 9-38828 A) is used as a guide component for preventing the tapping screw from becoming slanted. Another prior art screw fastening jig is know from US 2020/011073

### SUMMARY OF THE INVENTION

However, it is difficult to align the guide component disclosed in JP 9-38828 A and the pilot hole, so fastening may vary depending on a user. In addition, when fastening tapping screws to a plurality of pilot holes, alignment of the guide component is required for each pilot hole, which may increase work time. Therefore, there is a need for a tapping screw fastening jig that facilitates guide component alignment.

The present disclosure can be implemented as the following forms.

A first aspect of the present disclosure relates to a tapping screw fastening jig that fastens a fastening tool using a tapping screw to a mating member having at least three non-threaded pilot holes. The tapping screw fastening jig includes a guide component and a positioning component. The guide component includes a first base member provided with a guide hole portion through which the tapping screw is insertable at a position corresponding to each of the pilot holes in a use state of the tapping screw fastening jig. The positioning component includes a second base member, and at least two positioning pins provided on the second base member, in which the at least two positioning pins are provided at positions corresponding to at least two of the pilot holes in the use state. Each of the at least two positioning pins includes a first outer diameter portion that is insertable into the pilot hole in the use state, and a second outer diameter portion that is connected to the first outer diameter portion on a base end side of the first outer diameter portion and is insertable through the guide hole portion in the use state.

With the above configuration, since the guide component has the first base member provided with the guide hole portion through which the tapping screw can be inserted at a position corresponding to each of the pilot holes in the use state, by inserting the tapping screw into the guide hole portion and fastening it, it is possible to prevent the tapping screw from becoming obliquely fastened. Also, the positioning component has at least two positioning pins, and each of the at least two positioning pins has the first outer diameter portion that can be inserted into the pilot hole and the second outer diameter portion that can be inserted into the guide hole portion in the use state. Thus, positioning of the guide component with respect to the mating member and the fastening tool can be easily performed by inserting the positioning pins into the guide hole portions and the pilot holes.

In the first aspect, the second base member may further include a floating mechanism corresponding to a second reference pin, which is a positioning pin other than a first reference pin being one positioning pin, among the at least two positioning pins, and the floating mechanism may support the second reference pin with respect to the second base member so as to be able to swing in a radial direction of the second reference pin.

With the above configuration, the floating mechanism corresponding to the second reference pin is provided, and the floating mechanism supports the second reference pin in a radially swingable manner. Thus, compared with the configuration without the floating mechanism, the second reference pin can be easily inserted into the guide hole portion, so the positioning of the guide component can be easily performed.

A second aspect of the present disclosure relates to a fastening method using a tapping screw fastening jig, the fastening method including the steps of preparing the tapping screw fastening jig according to any one of the above forms, the mating member, the fastening tool, and the tapping screw, arranging the mating member, the fastening tool, and the guide component so that the positions of pilot hole of the mating member, an insertion hole of the fastening tool, and the guide hole portion of the guide component correspond to each other, positioning the guide component by inserting each of the at least two positioning pins of the positioning component into the corresponding guide hole portion and the corresponding pilot hole, performing first fastening of fastening the fastening tool to the mating member by inserting the tapping screw into the guide hole portion and the pilot hole into which the at least two positioning pins are not inserted, performing a first removal of removing the guide component, performing second fastening of fastening the fastening tool to the mating member by inserting the tapping screws into the guide hole portions and the pilot holes into which the at least two positioning pins have been inserted in step of positioning, and performing a second removal of removing the positioning component.

With the configuration described above, since the positioning component is used to position the guide component in the positioning step, the guide component can be easily positioned compared to a configuration in which the guide component is positioned, for example, visually without using the positioning component.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view illustrating a guide component as an embodiment;
FIG. 2 is a perspective view of a positioning component according to an embodiment;
FIG. 3 is an explanatory diagram illustrating a state in which a tapping screw is inserted through the guide component;
FIG. 4 is an explanatory diagram of a first reference pin in a use state;
FIG. 5 is an explanatory diagram of a second reference pin in a use state;
FIG. 6 is a flow chart illustrating procedures of a fastening method using a tapping screw fastening jig in a first embodiment;
FIG. 7 is a perspective view illustrating a mating member and a fastening tool before being fastened by the tapping screw;
FIG. 8 is a perspective view for illustrating arrangement step;
FIG. 9 is a perspective view for illustrating positioning step;
FIG. 10 is a perspective view for illustrating second fastening step; and
FIG. 11 is a perspective view illustrating the mating member to which the fastening tool is fastened.

### DETAILED DESCRIPTION OF EMBODIMENTS

### A. Embodiment:

### A1. Configuration of Tapping Screw Fastening Jig:

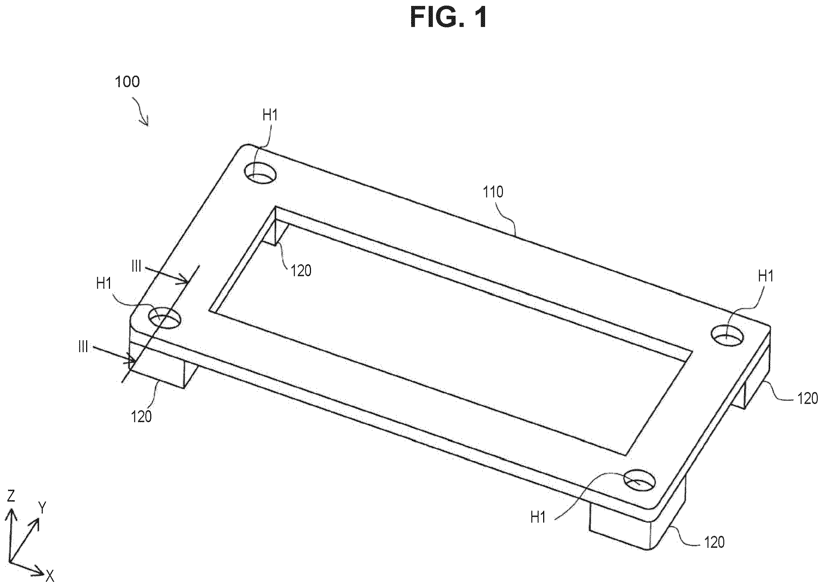

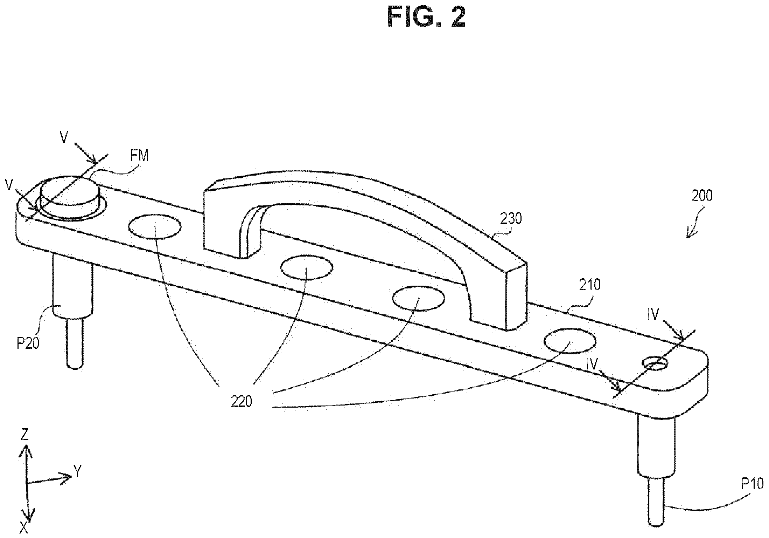

FIG. 1 is a perspective view illustrating a guide component 100 as an embodiment. FIG. 2 is a perspective view of a positioning component 200 according to an embodiment. A tapping screw fastening jig of the present embodiment is a jig for fastening a fastening tool to a mating member having at least three non-threaded pilot holes while internally threading the pilot holes. The tapping screw fastening jig is composed of the guide component 100 illustrated in FIG. 1 and the positioning component 200 illustrated in FIG. 2. In addition, the X-, Y-, and Z-axes illustrated in FIGS. 1 and 2 respectively correspond to the X-, Y-, and Z-axes in the other figures.

### A2. Configuration of Guide Component 100:

As illustrated in FIG. 1, the guide component 100 includes a first base member 110 and four cushioning members 120. The guide component 100 is a part for preventing a tapping screw from being inserted obliquely into the pilot hole. The external shape of the first base member 110 is in the form of a rectangular frame in plan view. The first base member 110 is manufactured, for example, by processing a resin material or metal such as iron. A guide hole portion H1 is provided in the first base member 110. The guide hole portion H1 is a through hole along a thickness direction (Z-axis direction) through which the tapping screw can be inserted. The guide hole portion H1 is provided at a position corresponding to the pilot hole of the mating member in a use state of the tapping screw fastening jig. Details of the use state will be described below.

The cushioning member 120 is a rectangular parallelepiped member and is made of, for example, a resin material. The cushioning member 120 is provided at a position corresponding to the guide hole portion H1 on one surface (surface in a -Z direction) of the first base member 110. The cushioning member 120 suppresses damage to the first base member 110 and the fastening tool due to direct contact between the first base member 110 and the fastening tool. The cushioning member 120 is provided with a through hole that communicates with the guide hole portion H1. The diameter of the guide hole portion H1 and the diameter of the through hole are substantially the same, and the center of the guide hole portion H1 and the center of the through hole substantially coincide. Further, the diameter of the guide hole portion H1 and the diameter of the through hole are set such that the angle of a tapping screw TS to be inserted is within 9 degrees. The reason for this will be described below.

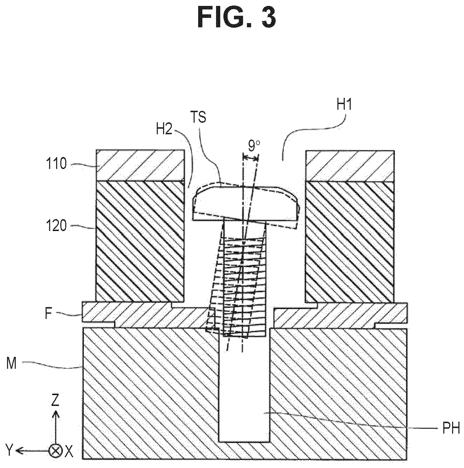

FIG. 3 is an explanatory diagram illustrating a state in which the tapping screw TS is inserted through the guide component 100. FIG. 3 illustrates a cross-section of the guide component 100 along the III-III cross-section line in FIG. 1. FIG. 3 also illustrates a mating member M, a fastening tool F, and the tapping screw TS, which are not illustrated in FIG. 1. As illustrated in FIG. 3, the tapping screw TS is inserted through the guide component 100 after the mating member M, the fastening tool F, and the guide component 100 are stacked in this order. When fastening the fastening tool F to the mating member M having a pilot hole PH that is not internally threaded, if the tapping screw TS is inserted obliquely and fastened, there is a risk that the fastening tool F and the mating member M cannot be properly fastened. More specifically, when the tapping screw TS is fastened while obliquely inserted, the fastening tool F and the mating member M cannot be brought into close contact with each other, so there is a risk that the fastening tool F and the mating member M cannot be fixed. In addition, since it is difficult to remove the internal threading from the mating member M, which was obliquely threaded, to regenerate the pilot hole PH, the mating member M which is obliquely fastened should be disposed of as a defective product. Here, by using the guide component 100 as illustrated in FIG. 3, it is possible to prevent the tapping screw TS from being obliquely inserted into the pilot hole PH, and thus the fastening tool F and the mating member M can be properly fastened. In addition, it is possible to reduce the number of defective products that are obliquely internally threaded.

Further, the inventors found that the mating member M and the fastening tool F can be properly fastened when the angle between the axis of the tapping screw TS and the axis of the pilot hole PH is within 9 degrees. Therefore, the diameters of the guide hole portion H1 and a through hole H2 in the present embodiment are set so that the angle of the axis of the tapping screw TS is within 9 degrees with respect to the angle of the axis of the pilot hole PH when the tapping screw TS as illustrated in FIG. 3 is inserted through the guide hole portion H1 and the through hole H2 before the tapping screw TS is fastened. In order to achieve such an angle between the axis of the tapping screw TS and the axis of the pilot hole PH, the diameter of the guide hole portion H1 and the diameter of the through hole H2 are set in consideration of the length and maximum diameter of the tapping screw TS.

### A3. Configuration of Positioning Component 200:

As illustrated in FIG. 2, the positioning component 200 includes a second base member 210, a first reference pin P10, and a second reference pin P20. The positioning component 200 is a component for aligning the positions of the guide hole portion H1 and the through hole H2 in the guide component 100 with the position of the pilot hole PH of the mating member M.

The second base member 210 has an elongated rectangular plate-like external shape and is manufactured by processing a metal such as iron. The second base member 210 is provided with a handle 230 and a plurality of punched portions 220. The handle 230 is provided so as to span the vicinity of the center in a longitudinal direction on one surface (surface in a +Z direction) of the second base member 210. The positioning component 200 can be easily carried by a user gripping the handle 230. The punched portions 220 are through holes provided along a thickness direction (Z-axis direction) of the second base member 210 to reduce the weight of the positioning component 200. The first reference pin P10 is provided as a positioning pin at a first end of the second base member 210, and the second reference pin P20 is provided as a positioning pin at a second end of the second base member 210. The first reference pin P10 and the second reference pin P20 are provided at positions corresponding to the pilot hole PH of the mating member M when the tapping screw fastening jig is used. The first reference pin P10 and the second reference pin P20 are provided so as to protrude from a surface (surface in the -Z direction) of the second base member 210 opposite to the surface on which the handle 230 is provided. The second base member 210 also has a floating mechanism FM corresponding to the second reference pin P20. Details of the floating mechanism FM will be described below.

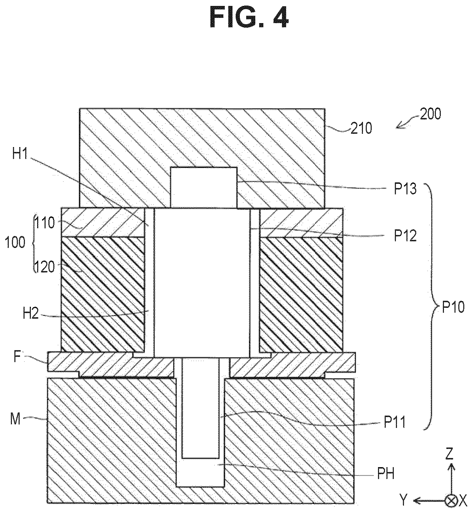

FIG. 4 is an explanatory diagram of the first reference pin P10 in the use state. FIG. 4 illustrates a cross-section of the positioning component 200 along the IV-IV cross-section line in FIG. 2. FIG. 4 also illustrates the mating member M, the fastening tool F, and the guide component 100, which are not illustrated in FIG. 2. As illustrated in FIG. 4, the first reference pin P10 is inserted into the guide hole portion H1, the through hole H2, and the pilot hole PH to align the guide component 100. The first reference pin P10 includes a first outer diameter portion P11, a second outer diameter portion P12, and a base portion P13. The first outer diameter portion P11 is located on the side closest to the tip of the first reference pin P10 and can be inserted into the pilot hole PH. The diameter of the first outer diameter portion P11 is smaller than the diameter of the pilot hole PH. The diameter of the first outer diameter portion P11 is, for example, 0.5 mm to 1 mm smaller than the diameter of the pilot hole PH. The second outer diameter portion P12 is connected to the first outer diameter portion P11 on a base end side (+Z direction side) and can be inserted into the guide hole portion H1 and the through hole H2. The diameter of the second outer diameter portion P12 is smaller than the diameters of the guide hole portion H1 and the through hole H2. The diameter of the second outer diameter portion P12 is, for example, 0.5 mm to 1 mm smaller than the diameters of the guide hole portion H1 and the through hole H2. The base portion P13 is connected to the second outer diameter portion P12 on the base end side (+Z direction side), and is located on the side closest to the base of the first reference pin P10. The base portion P13 is embedded in and held by the second base member 210.

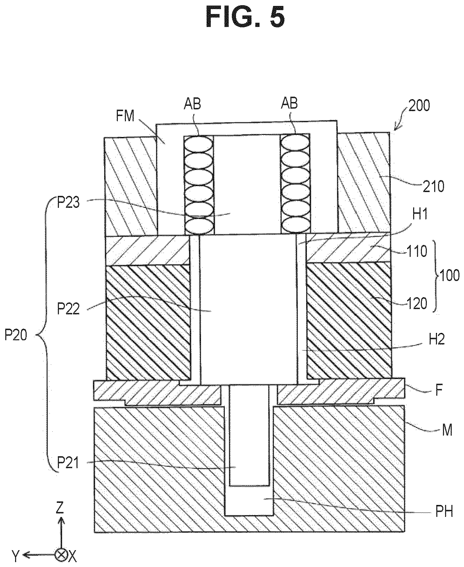

FIG. 5 is an explanatory diagram of the second reference pin P20 in the use state. FIG. 5 illustrates a cross-section of the positioning component 200 along the V-V cross-section line in FIG. 2. FIG. 5 also illustrates the mating member M, the fastening tool F, and the guide component 100, which are not illustrated in FIG. 2. As illustrated in FIG. 5, the second reference pin P20 is inserted into the guide hole portion H1, the through hole H2, and the pilot hole PH to align the guide component 100, similarly to the first reference pin P10 illustrated in FIG. 4. As illustrated in FIG. 5, the second reference pin P20 includes a first outer diameter portion P21, a second outer diameter portion P22, and a base portion P23. The second reference pin P20 differs from the first reference pin P10 in that the second reference pin P20 is supported by the second base member 210 via the floating mechanism FM. The first outer diameter portion P21, the second outer diameter portion P22, and the base portion P23 of the second reference pin P20 are respectively similar to the first outer diameter portion P11, the second outer diameter portion P12, and the base portion P13 of the first reference pin P10, so a detailed description thereof will be omitted.

The floating mechanism FM supports the second reference pin P20 so as to be capable of swinging in its radial direction. The floating mechanism FM is a cylindrical member provided so as to cover the base portion P23. The floating mechanism FM is provided with a plurality of springs AB. Each of the springs AB is arranged around the base portion P23 and biases the base portion P23 toward its center. With this structure, the second reference pin P20 can swing in the radial direction of the second reference pin P20 with respect to the second base member 210. In addition, in FIG. 5, the cross section of each spring AB is schematically represented by an ellipse. The swingable distance of the second reference pin P20 using the floating mechanism FM is, for example, 1 mm in the radial direction of the second reference pin P20. If the floating mechanism FM is not provided, there is almost no space (gap) when inserting the second reference pin P20 into the guide hole portion H1, so it may be difficult to insert the second reference pin P20 due to a manufacturing error (tolerance). By providing the floating mechanism FM like the positioning component 200 of the present embodiment and swinging the second reference pin P20 in the radial direction, the second reference pin P20 can be easily inserted into the guide hole portion H1, the through hole H2, and the pilot hole PH, and the alignment of the guide component 100 can be easily performed, compared with the configuration without the floating mechanism FM.

### A4. Fastening Method using Tapping Screw Fastening Jig:

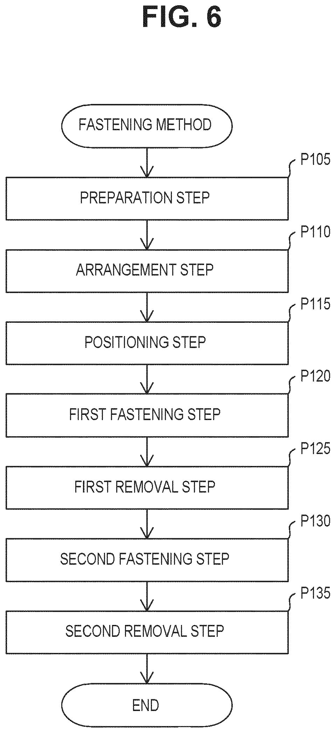

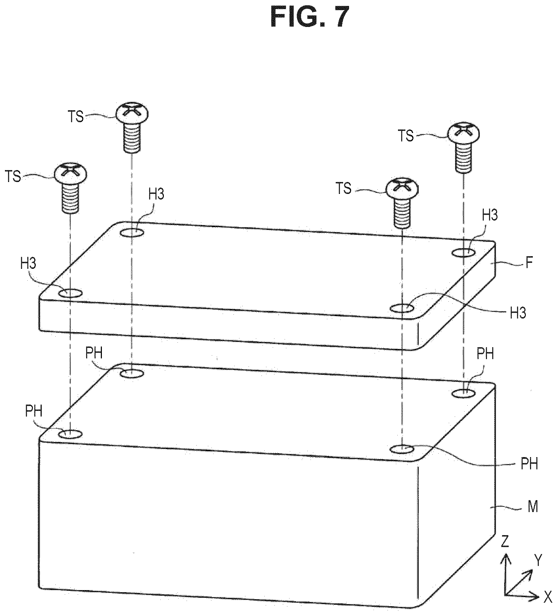

FIG. 6 is a flowchart illustrating the procedure of a fastening method using the tapping screw fastening jig in the first embodiment. FIG. 7 is a perspective view illustrating the mating member M and the fastening tool F before being fastened by the tapping screw TS. This fastening method is executed when the tapping screw TS is inserted into an insertion hole H3 and the pilot hole PH of, for example, the mating member M having the pilot hole PH in an unthreaded state as illustrated in FIG. 7, and the fastening tool F is fastened while internally threading the pilot hole PH.

As illustrated in FIG. 6, as preparation step (step P105), the guide component 100 as illustrated in FIG. 1, the positioning component 200 as illustrated in FIG. 2, the mating member M, the fastening tool F, and the tapping screw TS as illustrated in FIG. 7 are prepared.

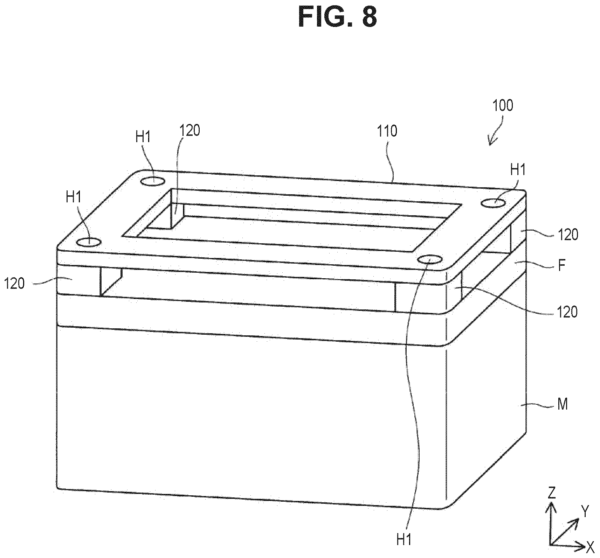

FIG. 8 is a perspective view for illustrating arrangement step. As illustrated in FIG. 6, in the arrangement step (step P110), the mating member M, the fastening tool F, and the guide component 100 prepared in the preparation step (step P105) are arranged. More specifically, as illustrated in FIG. 8, the mating member M, the fastening tool F, and the guide component 100 are stacked and arranged in this order so that the positions of the pilot hole PH of the mating member M, the insertion hole H3 of the fastening tool F, and the guide hole portion H1 of the guide component 100 roughly correspond to each other. Also, the guide component 100 is arranged so that the cushioning member 120 is in contact with the fastening tool F. Since the guide component 100 is positioned in positioning step (step P115) described below, it is not always necessary to precisely position the guide component in this step.

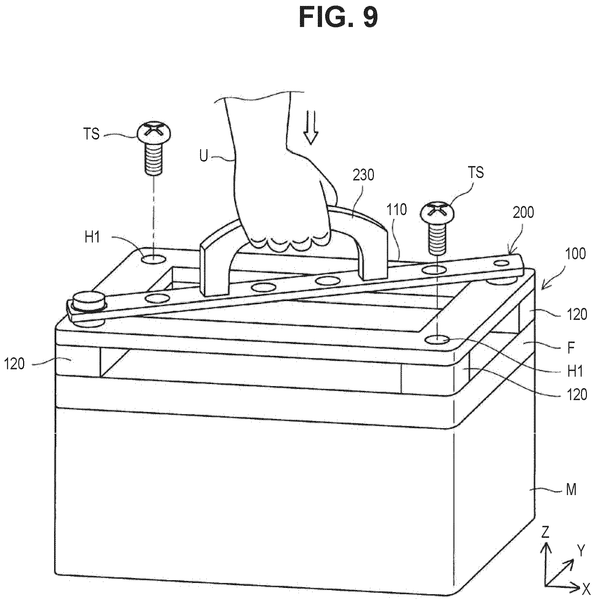

FIG. 9 is a perspective view for illustrating the positioning step. As illustrated in FIG. 6, as the positioning step (step P115), the guide component 100 arranged in the arrangement step (step P110) is positioned. More specifically, as illustrated in FIG. 9, a user U pushes the positioning component 200 in the direction of the arrow and inserts the first reference pin P10 and the second reference pin P20 into the corresponding guide hole portions H1, through holes H2, and pilot holes PH. In the present embodiment, the first reference pin P10 and the second reference pin P20 are provided so as to correspond to two guide hole portions H1 on a diagonal line among the plurality of guide hole portions H1. The first reference pin P10 and the second reference pin P20 may be provided to correspond to adjacent guide hole portions H1. By inserting the first reference pin P10 and the second reference pin P20 in this manner, the guide component 100 is positioned. In addition, as illustrated in FIG. 9, the state in which the first reference pin P10 and the second reference pin P20 of the positioning component 200 are respectively inserted into the corresponding guide hole portions H1 of the guide component 100 is called the "use state" of the tapping screw fastening jig in this disclosure.

As illustrated in FIG. 6, as first fastening step (step P120), the mating member M and the fastening tool F are fastened using the guide component 100 positioned in the positioning step (step P115). More specifically, as illustrated in FIG. 9, tapping screws TS are inserted into the guide hole portions H1 where the first reference pin P10 and the second reference pin P20 are not inserted, and the fastening tool F is fastened to the mating member M. Fastening is performed using any tool such as an electric screwdriver.

As illustrated in FIG. 6, as first removal step (step P125), the positioning component 200 is removed after the first fastening step (step P120). In this case, it is preferable that the positioning component 200 is removed so that the position of the guide component 100 does not deviate as much as possible.

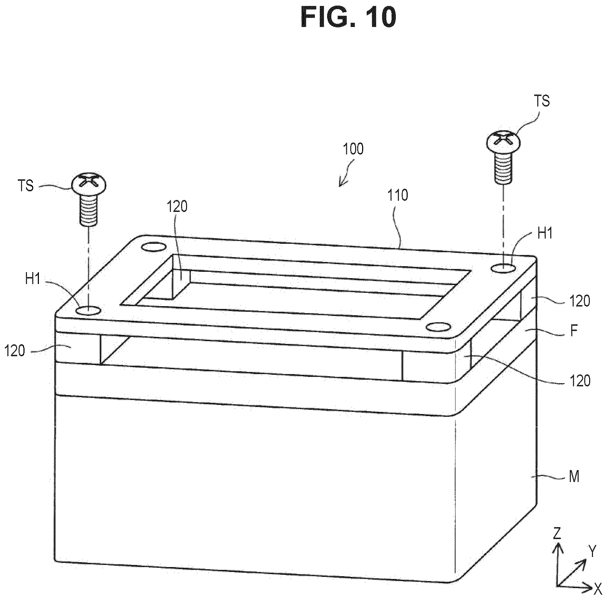

FIG. 10 is a perspective view for illustrating second fastening step. As illustrated in FIG. 6, as second fastening step (step P130), the mating member M and the fastening tool F are fastened using the guide component 100 after the positioning component 200 has been removed in the first removal step (step P125). More specifically, as illustrated in FIG. 10, tapping screws TS are inserted into guide hole portions H1 and pilot holes PH into which the positioning pins (first reference pin P10 and second reference pin P20) have been inserted in the positioning step (step P115) to perform fastening. It can also be said that the tapping screw TS is fastened by insertion into the guide hole portion H1 into which the tapping screw TS was not inserted and fastened in the first fastening step (step P120).

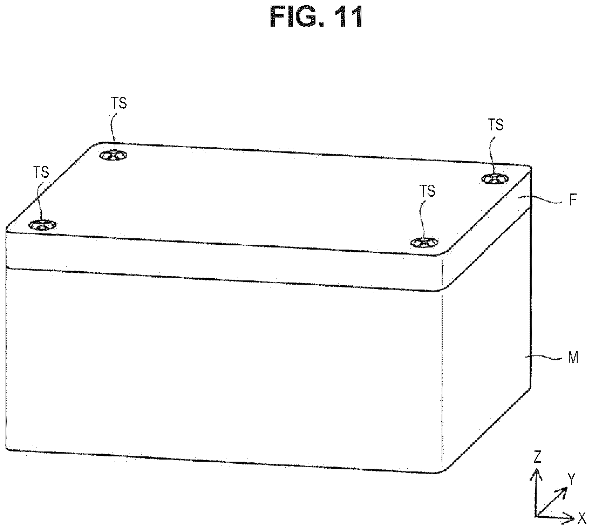

FIG. 11 is a perspective view illustrating the mating member M to which the fastening tool F is fastened. As illustrated in FIG. 6, as second removal step (step P135), the guide component 100 is removed after the second fastening step (step P130). As illustrated in FIG. 11, the fastening method using the tapping screw fastening jig is completed by removing the guide component 100.

According to the tapping screw fastening jig of the embodiment described above, since the guide component 100 has the first base member 110 provided with the guide hole portion H1 through which the tapping screw TS can be inserted at a position corresponding to each of the pilot holes PH in the use state, by inserting the tapping screw TS into the guide hole portion H1 and fastening it, it is possible to prevent the tapping screw TS from becoming obliquely fastened. Also, the positioning component 200 has at least two positioning pins. The at least two positioning pins has (i) the first reference pin P10 having the first outer diameter portion P11 that can be inserted into the pilot hole PH and the second outer diameter portion P12 that can be inserted into the guide hole portion H1 in the use state, and (ii) the second reference pin P20 having the first outer diameter portion P21 that can be inserted into the pilot hole PH and the second outer diameter portion P22 that can be inserted into the guide hole portion H1 in the use state. Thus, positioning of the guide component 100 with respect to the mating member M and the fastening tool F can be easily performed by inserting the positioning pins into the guide hole portions H1 and the pilot holes PH.

Further, the second base member 210 has the floating mechanism FM corresponding to the second reference pin P20, and the floating mechanism FM supports the second reference pin P20 in a radially swingable manner. Thus, compared with the configuration without the floating mechanism FM, the second reference pin P20 can be easily inserted into the guide hole portion H1, so the positioning of the guide component 100 can be easily performed.

In addition, since the guide component 100 includes the cushioning member 120, compared to a configuration without the cushioning member 120, the guide component 100 and the fastening tool F can be prevented from rubbing against each other and being damaged.

### B. Other Embodiments:

### B1

In the embodiment described above, the number of each of the pilot holes PH, the guide hole portions H1, and the through holes H2 may be any number of three or more.

### B2

In the embodiment described above, the positioning component 200 includes two positioning pins, the first reference pin P10 and the second reference pin P20, but the present disclosure is not limited thereto. The positioning component 200 may include any number of positioning pins equal to or greater than two corresponding to the pilot holes PH of the mating member M in the use state. The total number of positioning pins is two or more and not more than one less than the total number of pilot holes PH of the mating member M to be fastened. This is for inserting and fastening the tapping screw TS into the guide hole portion H1 and the pilot hole PH in which the positioning pin is not inserted in the above-described first fastening step (step P120). Also, when the positioning component 200 has an arbitrary number of positioning pins of three or more, one positioning pin corresponds to the first reference pin P10. That is, one positioning pin is the positioning pin that is not supported by the floating mechanism FM. In addition, the positioning pins other than the one positioning pin correspond to the second reference pins P20. That is, all positioning pins except one positioning pin are the positioning pins supported by the floating mechanisms FM.

### B3

In the embodiment described above, the external shape of the guide component 100 is a rectangular frame shape in plan view, but the present disclosure is not limited thereto. The external shape of the guide component 100 may be any shape such as a circular shape, an elliptical shape, or a polygonal shape in plan view. Further, in the embodiment described above, the external shape of the positioning component 200 is an elongated rectangular plate shape, but the present disclosure is not limited thereto. The external shape of the positioning component 200 may be circular, elliptical, polygonal, or any other shape.

### B4

Although the guide component 100 includes the cushioning member 120 in the embodiment described above, the present disclosure is not limited thereto. The guide component 100 may be configured without the cushioning member 120.

### B5

Although the guide component 100 includes the floating mechanism FM in the embodiment described above, the present disclosure is not limited thereto. The guide component 100 may be configured without the floating mechanism FM, that is, configured with only the first reference pin as the positioning pin.

The present disclosure is not limited to the embodiment described above, and can be implemented in various configurations without departing from the scope of the present disclosure as defined in the claims. For example, the technical features in the embodiment corresponding to the technical features in each form described in the SUMMARY OF THE INVENTION column can be appropriately replaced or combined in order to solve some or all of the above-described problems or achieve some or all of the above-described effects.

## Claims

1. A tapping screw fastening jig that fastens a fastening tool (F) using a tapping screw (TS) to a mating member (M) having at least three non-threaded pilot holes (PH), the tapping screw fastening jig comprising:
a guide component (100); and
a positioning component (200), wherein:
the guide component (100) includes a first base member (110) provided with a guide hole portion (H1) through which the tapping screw (TS) is insertable at a position corresponding to each of the pilot holes (PH) in a use state of the tapping screw fastening jig; and
the positioning component (200) includes:
a second base member (210); and
at least two positioning pins (P10, P20) provided on the second base member (210), where the at least two positioning pins (P10, P20) are provided at positions corresponding to at least two of the pilot holes (PH) in the use state, wherein
each of the at least two positioning pins (P10, P20) including a first outer diameter portion (P11, P21) that is insertable into the pilot hole (PH) in the use state, and a second outer diameter portion (P12, P22) that is connected to the first outer diameter portion (P11, P21) on a base end side of the first outer diameter portion (P11, P21) and is insertable through the guide hole portion (H1) in the use state.

2. The tapping screw fastening jig according to claim 1, wherein:
the second base member (210) further includes a floating mechanism (FM) corresponding to a second reference pin (P20), which is a positioning pin other than a first reference pin (P10) being one positioning pin, among the at least two positioning pins (P10, P20); and
the floating mechanism (FM) supports the second reference pin (P20) with respect to the second base member (210) so as to be able to swing in a radial direction of the second reference pin (P20).

3. A fastening method using a tapping screw fastening jig, the fastening method comprising the steps of:
preparing the tapping screw fastening jig according to claim 1 or 2, the mating member (M), the fastening tool (F), and the tapping screw (TS);
arranging the mating member (M), the fastening tool (F), and the guide component (100) so that positions of the pilot hole (PH) of the mating member (M), an insertion hole of the fastening tool (F), and the guide hole portion (H1) of the guide component (100) correspond to each other;
positioning the guide component (100) by inserting each of the at least two positioning pins (P10, P20) of the positioning component (200) into the corresponding guide hole portion (H1) and the corresponding pilot hole (PH);
performing first fastening of fastening the fastening tool (F) to the mating member (M) by inserting the tapping screw (TS) into the guide hole portion (H1) and the pilot hole (PH) into which the at least two positioning pins (P10, P20) are not inserted;
performing a first removal of removing the guide component (100);
performing second fastening of fastening the fastening tool (F) to the mating member (M) by inserting the tapping screws (TS) into the guide hole portions (H1) and the pilot holes (PH) into which the at least two positioning pins (P10, P20) have been inserted in the step of positioning; and
performing a second removal of removing the positioning component (200).

## Patentansprüche

1. Befestigungsvorrichtung für selbstschneidende Schrauben, die ein Befestigungswerkzeug (F) unter Verwendung einer selbstschneidenden Schraube (TS) an einem Gegenelement (M) befestigt, das mindestens drei gewindelose Pilotbohrungen (PH) aufweist, wobei die Befestigungsvorrichtung für selbstschneidende Schrauben Folgendes umfasst:
eine Führungskomponente (100); und
eine Positionierungskomponente (200), wobei:
die Führungskomponente (100) ein erstes Basiselement (110) umfasst, das mit einem Führungslochabschnitt (H1) vorgesehen ist, durch den die selbstschneidende Schraube (TS) in einem Gebrauchszustand der Befestigungsvorrichtung für selbstschneidende Schrauben an einer Position einführbar ist, die jeder der Pilotbohrungen (PH) entspricht; und
die Positionierungskomponente (200) Folgendes umfasst:
ein zweites Basiselement (210); und
mindestens zwei Positionierungsstifte (P10, P20), die auf dem zweiten Basiselement (210) vorgesehen sind, wo die mindestens zwei Positionierungsstifte (P10, P20) im Gebrauchszustand an Positionen vorgesehen sind, die mindestens zwei der Pilotbohrungen (PH) entsprechen, wobei
jeder der mindestens zwei Positionierungsstifte (P10, P20) einen ersten Außendurchmesserabschnitt (P11, P21), der im Gebrauchszustand in die Pilotbohrung (PH) einführbar ist, und einen zweiten Außendurchmesserabschnitt (P12, P22) umfasst, der mit dem ersten Außendurchmesserabschnitt (P11, P21) an einer Basisendseite des ersten Außendurchmesserabschnitts (P11, P21) verbunden ist und im Gebrauchszustand durch den Führungslochabschnitt (H1) einführbar ist.

2. Befestigungsvorrichtung für selbstschneidende Schrauben nach Anspruch 1, wobei:
das zweite Basiselement (210) ferner einen Schwebemechanismus (FM) umfasst, der einem zweiten Referenzstift (P20) entspricht, der ein anderer Positionierungsstift als ein erster Referenzstift (P10) ist, der einer der Positionierungsstifte unter den mindestens zwei Positionierungsstiften (P10, P20) ist; und
der Schwebemechanismus (FM) den zweiten Referenzstift (P20) in Bezug auf das zweite Basiselement (210) so trägt, dass er in einer radialen Richtung des zweiten Referenzstifts (P20) schwingen kann.

3. Befestigungsverfahren unter Verwendung einer Befestigungsvorrichtung für selbstschneidende Schrauben, wobei das Befestigungsverfahren die folgenden Schritte umfasst:
Vorbereiten der Befestigungsvorrichtung für selbstschneidende Schrauben nach Anspruch 1 oder 2, des Gegenelements (M), des Befestigungswerkzeugs (F) und der selbstschneidenden Schraube (TS);
Anordnen des Gegenelements (M), des Befestigungswerkzeugs (F) und der Führungskomponente (100) so, dass die Positionen der Pilotbohrung (PH) des Gegenelements (M), eines Einführlochs des Befestigungswerkzeugs (F) und des Führungslochabschnitts (H1) der Führungskomponente (100) einander entsprechen;
Positionieren der Führungskomponente (100) durch Einführen jedes der mindestens zwei Positionierungsstifte (P10, P20) der Positionierungskomponente (200) in den entsprechenden Führungslochabschnitt (H1) und die entsprechende Pilotbohrung (PH);
Durchführen einer ersten Befestigung zum Befestigen des Befestigungswerkzeugs (F) an dem Gegenelement (M) durch Einführen der selbstschneidenden Schraube (TS) in den Führungslochabschnitt (H1) und die Pilotbohrung (PH), in die die mindestens zwei Positionierungsstifte (P10, P20) nicht eingeführt sind;
Durchführen einer ersten Entfernung zum Entfernen der Führungskomponente (100);
Durchführen einer zweiten Befestigung zum Befestigen des Befestigungswerkzeugs (F) an dem Gegenelement (M) durch Einführen der selbstschneidenden Schrauben (TS) in die Führungslochabschnitte (H1) und die Pilotbohrungen (PH), in die die mindestens zwei Positionierungsstifte (P10, P20) in dem Schritt des Positionierens eingeführt wurden; und
Durchführen einer zweiten Entfernung zum Entfernen der Positionierungskomponente (200).

## Revendications

1. Gabarit de fixation de vis taraudeuse qui fixe un outil de fixation (F) à l'aide d'une vis taraudeuse (TS) à un élément d'accouplement (M) ayant au moins trois trous pilotes (PH) non filetés, le gabarit de fixation de vis taraudeuse comprenant :
un composant de guidage (100) ; et
un composant de positionnement (200), dans lequel :
le composant de guidage (100) inclut un premier élément de base (110) muni d'une portion de trou de guidage (H1) à travers laquelle la vis taraudeuse (TS) peut être insérée à une position correspondant à chacun des trous pilotes (PH) dans un état d'utilisation du gabarit de fixation de vis taraudeuse ; et
le composant de positionnement (200) inclut :
un deuxième élément de base (210) ; et
au moins deux goupilles (P10, P20) de positionnement prévues sur le deuxième élément de base (210), où les au moins deux goupilles (P10, P20) de positionnement sont prévues à des positions correspondant à au moins deux des trous pilotes (PH) dans l'état d'utilisation, dans lequel
chacune des au moins deux goupilles (P10, P20) de positionnement inclut une première portion de diamètre extérieur (P11, P21) qui peut être insérée dans le trou pilote (PH) dans l'état d'utilisation, et une deuxième portion de diamètre extérieur (P12, P22) qui est reliée à la première portion de diamètre extérieur (P11, P21) sur un côté extrémité de base de la première portion de diamètre extérieur (P11, P21) et qui peut être insérée à travers la portion de trou de guidage (H1) dans l'état d'utilisation.

2. Gabarit de fixation de vis taraudeuse selon la revendication 1, dans lequel :
le deuxième élément de base (210) inclut en outre un mécanisme flottant (FM) correspondant à une deuxième goupille (P20) de référence, qui est une goupille de positionnement autre qu'une première goupille (P10) de référence étant une goupille de positionnement, parmi les au moins deux goupilles (P10, P20) de positionnement ; et
le mécanisme flottant (FM) supporte la deuxième goupille (P20) de référence par rapport au deuxième élément de base (210) de manière à pouvoir pivoter dans une direction radiale de la deuxième goupille (P20) de référence.

3. Procédé de fixation utilisant un gabarit de fixation de vis taraudeuse, le procédé de fixation comprenant les étapes consistant à :
préparer le gabarit de fixation de vis taraudeuse selon la revendication 1 ou 2, l'élément d'accouplement (M), l'outil de fixation (F), et la vis taraudeuse (TS) ;
agencer l'élément d'accouplement (M), l'outil de fixation (F), et le composant de guidage (100) de sorte que des positions du trou pilote (PH) de l'élément d'accouplement (M), d'un trou d'insertion de l'outil de fixation (F), et de la portion de trou de guidage (H1) du composant de guidage (100) correspondent les unes aux autres ;
positionner le composant de guidage (100) en insérant chacune des au moins deux goupilles (P10, P20) de positionnement du composant de positionnement (200) dans la portion de trou de guidage (H1) correspondante et le trou pilote (PH) correspondant ;
réaliser une première fixation consistant à fixer l'outil de fixation (F) à l'élément d'accouplement (M) en insérant la vis taraudeuse (TS) dans la portion de trou de guidage (H1) et le trou pilote (PH) dans lesquels les au moins deux goupilles (P10, P20) de positionnement ne sont pas insérées ;
réaliser un premier retrait consistant à retirer le composant de guidage (100) ;
réaliser une deuxième fixation consistant à fixer l'outil de fixation (F) à l'élément d'accouplement (M) en insérant les vis taraudeuses (TS) dans les portions de trou de guidage (H1) et les trous pilotes (PH) dans lesquels les au moins deux goupilles (P10, P20) de positionnement ont été insérées lors de l'étape de positionnement ; et
réaliser un deuxième retrait consistant à retirer le composant de positionnement (200).
